# EUROPÄISCHE PATENTANMELDUNG

(11) **EP 1 332 898 A2**
(43) Veröffentlichungstag der Anmeldung: **06.08.2003**
(21) Anmeldenummer: 03001853.5
(22) Anmeldetag: 29.01.2003
(51) Int. Cl.: B60H 1/24, B60H 1/34

(54) **Vorrichtung zur Luftverteilung im Innenraum eines Kraftfahrzeugs**

(30) Priorität: 01.02.2002 DE 10204121
(71) Anmelder: DaimlerChrysler AG, 70567 Stuttgart (DE)
(72) Erfinder: Freithaler, Hans-Jürgen, 71067 Sindelfingen (DE); Kelz, Michael, 71134 Aidlingen (DE)

(57) **Zusammenfassung**

Eine Vorrichtung zur Luftverteilung im Innenraum eines Kraftfahrzeugs weist folgende Merkmale auf:
ein in einer Instrumententafel angeordnetes Gehäuse mit wenigstens einer Luftzuführöffnung und mit mehreren Luftabströmöffnungen, welche zumindest teilweise zu Luftausströmdüsen führen, die Luft in den Innenraum befördern,
wenigstens zwei der Luftausströmdüsen sind beabstandet voneinander angeordnet,
mehreren in dem Gehäuse gelagerten Absperrelementen zum Absperren von wenigstens den zu den Luftausströmdüsen führenden Luftabströmöffnungen,
die Absperrelemente sind über mechanische Verbindungselemente mit wenigstens einem, von Hand bedienbaren, in dem Gehäuse gelagerten Betätigungselement verbunden,
das Gehäuse ist mit den Absperrelementen, den Betätigungselementen und den Verbindungselementen als komplette Einheit in die Instrumententafel eingebaut.

## Beschreibung

Die Erfindung betrifft eine Vorrichtung zur Luftverteilung im Innenraum eines Kraftfahrzeugs.

Aus der DE 24 24 938 C2 ist eine Anordnung von Baugruppen einer Klimaanlage in einem Kraftfahrzeug bekannt, bei welcher zum Zwecke einer einfacheren Montage ein Steuerkasten als getrenntes Bauteil in eine Montageöffnung eines Armaturenbretts eingepaßt ist.

Die DE 26 48 663 A1 beschreibt eine Belüftungsvorrichtung für einen Innenraum eines Fahrzeugs, welche bei minimalem Aufwand an Stelleinrichtungen ohne Verlust an Einstellmöglichkeiten mit verschiedenen anderen Bauteilen eines Armaturenbretts zu einer Einheit zusammengefaßt sein kann. Hierzu sind in einem Verteilergehäuse mehrere Strömungswege vorgesehen.

In der DE 199 09 663 A1 ist eine Heizungs- oder Klimaanlage für ein Kraftfahrzeug gezeigt. Diese Heizungsoder Klimaanlage weist ein Lufttemperierungsmodul und ein Luftverteilungsmodul auf.

Eine Betätigungsvorrichtung für Bowdenzüge für Heizungs- und Lüftungsklappen in Kraftfahrzeugen beschreibt die DE 31 36 672 C2.

Nachteilig bei den bekannten Luftverteilungsvorrichtungen ist häufig deren geringe Funktionalität sowie die meist aufwendige Montage derselben im Armaturenbrett.

Es ist Aufgabe der vorliegenden Erfindung, eine Vorrichtung zur Luftverteilung im Innenraum eines Kraftfahrzeugs zu schaffen, welche zum einen mit geringem Montageaufwand an einer Instrumententafel bzw. einem Armaturenbrett des Kraftfahrzeugs angebracht werden kann und welche zum anderen eine Betätigung weiterer in den Innenraum des Kraftfahrzeugs führender Luftausströmdüsen ermöglicht.

Erfindungsgemäß wird diese Aufgabe durch die in Anspruch 1 genannten Merkmale gelöst.

Erfindungsgemäß können mit den in dem Gehäuse gelagerten Absperrelementen diejenigen Luftabströmöffnungen durch jeweiliges Schließen oder Öffnen gesteuert werden, die zu den Luftausströmdüsen führen. Dadurch wird ermöglicht, von einem zentralen Punkt in dem Gehäuse, an dem die Betätigungselemente untergebracht sind, auch entfernt von dem Gehäuse angebrachte Luftausströmdüsen zu steuern, und zwar mit sehr einfachen mechanischen Mitteln, nämlich den Verbindungselementen, welche die Betätigungselemente mit den Absperrelementen mechanisch verbinden. Diese einfache Konstruktion der erfindungsgemäßen Vorrichtung verursacht also trotz ihrer hohen Funktionalität nur sehr geringe Kosten.

Dadurch, daß in dem Gehäuse sowohl die Absperrelemente als auch die Betätigungselemente sowie die diese beiden Elemente miteinander verbindenden Verbindungselemente angeordnet sind, ergeben sich bei der Montage des Gehäuses in der Instrumententafel keinerlei Toleranzprobleme, was die Montage des erfindungsgemäßen Gehäuses erheblich vereinfacht. Der beschriebene Aufbau des Gehäuses ermöglicht nämlich vorteilhafterweise den Einbau desselben mit den Absperrelementen, den Betätigungselementen und den Verbindungselementen als komplette Einheit in die Instrumententafel.

Eine für eine große Anzahl an Kraftfahrzeugen sehr gut geeignete Weiterbildung der Erfindung kann darin bestehen, daß wenigstens zwei erste Luftausströmdüsen in einem mittleren Bereich der Instrumententafel und wenigstens zwei zweite Luftausströmdüsen in den seitlichen Endbereichen der Instrumententafel angeordnet sind.

Weitere vorteilhafte Ausgestaltungen und Weiterbildungen der Erfindung ergeben sich aus den restlichen Unteransprüchen sowie aus dem nachfolgend anhand der Zeichnung prinzipmäßig dargestellten Ausführungsbeispiel.

Es zeigt:
- Fig. 1: eine äußerst schematische Darstellung einer Instrumententafel mit einer darin angeordneten erfindungsgemäßen Vorrichtung zur Luftverteilung;
- Fig. 2: eine perspektivische Darstellung der erfindungsgemäßen Vorrichtung zur Luftverteilung;
- Fig. 3: einen Schnitt nach der Linie III-III aus Fig. 2; und
- Fig. 4: einen Schnitt nach der Linie IV-IV aus Fig. 2.

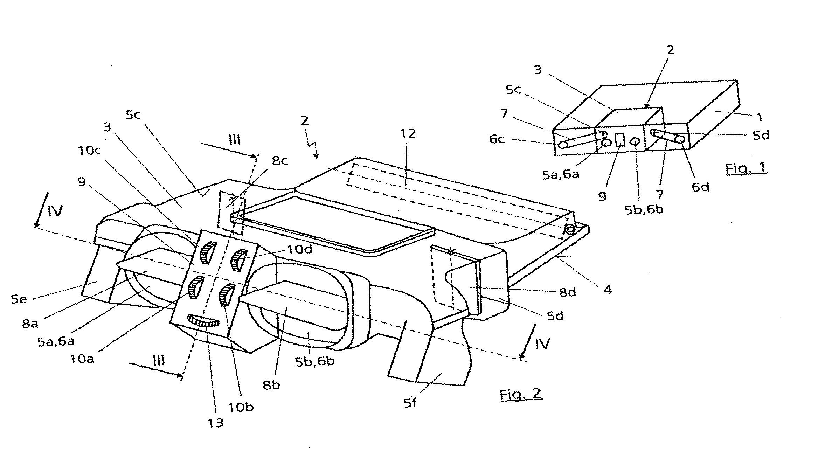

Fig. 1 zeigt in äußerst schematischer Darstellung eine Instrumententafel 1 eines in seiner Gesamtheit nicht dargestellten Kraftfahrzeugs. Innerhalb der Instrumententafel 1 ist eine Vorrichtung 2 zur Luftverteilung im Innenraum des Kraftfahrzeugs angeordnet, welche gegebenenfalls mit einer nicht dargestellten Klimaanlage in Verbindung stehen kann.

Die Vorrichtung 2 weist ein beispielsweise aus Kunststoff bestehendes Gehäuse 3 mit einer in Fig. 2 dargestellten Luftzuführöffnung 4 sowie insgesamt sechs Luftabströmöffnungen 5a, 5b, 5c, 5d, 5e und 5f auf. Durch die Luftzuführöffnung 4 wird, beispielsweise von einem darunter angeordneten Klimakasten einer Klimaanlage, Luft in das Gehäuse 3 eingeleitet.

Die beiden Luftabströmöffnungen 5a und 5b sind unmittelbar mit Luftausströmdüsen 6a und 6b verbunden, welche sich in einem mittleren Bereich der Instrumententafel 1 befinden, bzw. fallen mit diesen Luftausströmdüsen 6a und 6b zusammen. Dagegen sind die beiden, jeweils in einem seitlichen Bereich des Gehäuses 3 vorgesehenen Luftabströmöffnungen 5c und 5d über zwei voneinander unabhängige Luftkanäle 7 mit Luftausströmdüsen 6c und 6d verbunden, welche sich in den beiden seitlichen Endbereichen der Instrumententafel 1 und somit beabstandet von den ersten Luftausströmdüsen 6a und 6b befinden. Die Luftausströmdüsen 6a und 6b werden aufgrund ihrer Anordnung auch als Mittelausströmdüsen und die Luftausströmdüsen 6c und 6d als Seitenausströmdüsen bezeichnet. Die Luftabströmöffnungen 5e und 5f können z.B. zu einem nicht dargestellten Fußbereich im vorderen oder hinteren Innenraum des Kraftfahrzeugs führen, wo ebenfalls Luftausströmdüsen vorgesehen sein können.

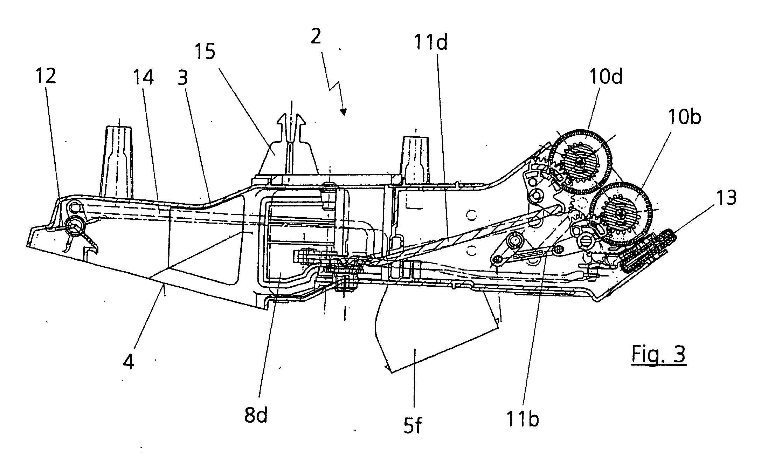

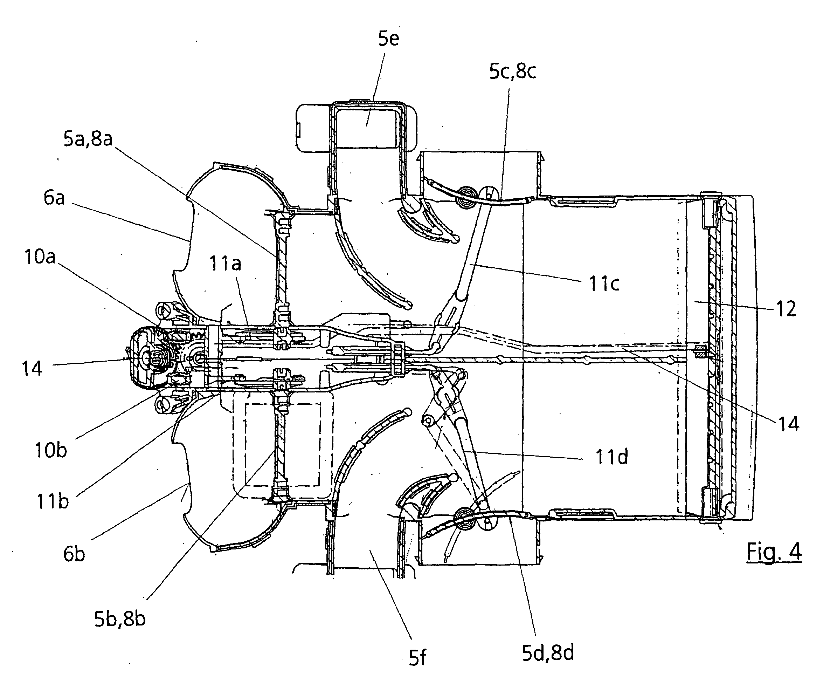

Wie in Fig. 2 dargestellt, sind die Luftabströmöffnungen 5a, 5b, 5c und 5d mittels jeweiliger, im vorliegenden Fall als Klappen ausgebildeter Absperrelemente 8a, 8b, 8c und 8d steuerbar, d.h. sie können mit den Absperrelementen 8a, 8b, 8c und 8d geöffnet bzw. geschlossen werden. Die Absperrelemente 8a, 8b, 8c und 8d sind dabei jeweils in dem Gehäuse 3 gelagert. Um diese Steuerung der Absperrelemente 8a, 8b, 8c und 8d zu erreichen, sind auf einem Bedienfeld 9 des Gehäuses 3 insgesamt vier als von Hand drehbare Räder ausgebildete Betätigungselemente 10a, 10b, 10c, 10d angeordnet, welche mit den jeweiligen Absperrelementen 8a, 8b, 8c und 8d über in den Figuren 3 und 4 näher dargestellte mechanische Verbindungselemente 11a, 11b, 11c und 11d verbunden sind. Die Betätigungselemente 10a, 10b, 10c, 10d sind also ebenfalls in dem Gehäuse 3 gelagert.

Durch die beschriebene Anordnung der Betätigungselemente 10a, 10b, 10c, 10d ist eine zentrale Steuerung der Luftabströmöffnungen 5a, 5b, 5c und 5d bzw. der Luftausströmdüsen 6a, 6b, 6c und 6d vom Bedienfeld 9 aus durch den Fahrer möglich und es können ansonsten erforderlich Betätigungselemente an den seitlichen Luftausströmdüsen 6c und 6d entfallen. Hierbei kann das Gehäuse 3 gegebenenfalls vollständig geschlossen werden.

Die beiden Luftabströmöffnungen 5e und 5f können gegebenenfalls auch mit Absperrelementen und dieselben über Verbindungselemente steuernde Betätigungselemente geöffnet und geschlossen werden. Solche hierfür vorgesehenen Betätigungselemente könnten ebenfalls an dem Bedienfeld 9 angeordnet sein.

Ein weiteres, in dem Gehäuse 3 gelagertes Absperrelement 12 kann über ein ebenfalls auf dem Bedienfeld 9 angeordnetes Betätigungselement 13 und ein damit verbundenes Verbindungselement 14 gesteuert werden. Mit dem Absperrelement 12 ist eine sogenannte Kaltluftabsenkung möglich, bei welcher der über die Luftzuführöffnung 4 in das Gehäuse 3 einströmenden Luft kalte Frischluft beigemischt werden kann.

In Fig. 3 sind zwei der Verbindungselemente, nämlich die Verbindungselemente 11b und 11d dargestellt. Diese sind jeweils als Gestänge ausgebildet und auf der einen Seite mit den Absperrelementen 8b und 8d und auf der anderen Seite mit den zugehörigen Betätigungselementen 10b und 10d verbunden. Im vorliegenden Fall sind für den Anschluß der Verbindungselemente 11b und 11d an den Betätigungselementen 10b und 10d Zahnräder vorgesehen. Des weiteren ist in Fig. 3 die Luftzuführöffnung 4 zu dem Gehäuse 3 sowie ein Befestigungselement 15 erkennbar, an welchem das Gehäuse 3 beispielsweise an der Instrumententafel 1 befestigt werden kann.

Die Anbringung der Verbindungselemente 11a, 11b, 11c und 11d an den Absperrelementen 8a, 8b, 8c und 8d kann Fig. 4 entnommen werden, wo die Absperrelemente 8a, 8b, 8c und 8d jeweils in dem Zustand dargestellt sind, in dem sie die Luftabströmöffnungen 5a, 5b, 5c und 5d verschließen. Auf diese Weise kann die in dem Gehäuse 3 sich befindliche Luft nicht durch die Luftausströmdüsen 6a, 6b, 6c und 6d in den Innenraum des Kraftfahrzeugs gelangen.

Durch die Anordnung sämtlicher für die Steuerung der Luftabströmöffnungen 5a, 5b, 5c und 5d erforderlicher Elemente, nämlich der Absperrelemente 8a, 8b, 8c und 8d, der Verbindungselemente 11a, 11b, 11c und 11d sowie der Betätigungselemente 10a, 10b, 10c und 10d innerhalb des Gehäuses 3 sind diese bei der Montage der Vorrichtung 2 bzw. des Gehäuses 3 der Instrumententafel 1 keinen montagebedingten Toleranzen unterworfen, so daß kein Längenausgleich erforderlich ist und sich trotz der erhöhten Funktionalität der Vorrichtung 2 eine einfachere Montage derselben ergibt, da das Gehäuse 3 als komplette Einheit in die Instrumententafel 1 eingebaut werden kann. Bei der Montage des Gehäuses 3 in die Instrumententafel 1 wird in der Praxis zunächst das Gehäuse 3 an der Karosserie oder an karosseriefesten Bauteilen angebracht und anschließend die Instrumententafel 1 über das Gehäuse 3 geschoben, so daß eine vordere Öffnung in der Instrumententafel 1 kleiner sein kann als das Gehäuse 3. Anschließend kann über das Gehäuse 3 noch eine nicht dargestellte Blende montiert werden.

In einer nicht dargestellten Ausführungsform der Vorrichtung 2 könnten auch lediglich die Absperrelemente 8a, 8b, 8e und 8f vorgesehen sein, die dann die Luftabströmöffnungen 5a, 5b, 5e und 5f steuern könnten, und zwar unabhängig davon, ob das Gehäuse 3 die Luftabströmöffnungen 5c und 5d aufweist oder nicht.

Des weiteren wäre denkbar für jeweils zwei der Luftausströmdüsen 6a und 6b bzw. 6c und 6d ein gemeinsames Betätigungselement 10a und 10c vorzusehen und auf die Betätigungselemente 10b und 10d zu verzichten. In einem solchen Fall könnten jeweils die Verbindungselemente 11a und 11b sowie 11c und 11d paarweise mit den zugehörigen Betätigungselementen 10a und 10c gekoppelt sein.

## Patentansprüche

1. Vorrichtung zur Luftverteilung im Innenraum eines Kraftfahrzeugs mit folgenden Merkmalen:
1.1 einem in einer Instrumententafel (1) angeordneten Gehäuse (3) mit wenigstens einer Luftzuführöffnung (4) und mit mehreren Luftabströmöffnungen (5a,5b,5c,5d,5e,5f), welche zumindest teilweise zu Luftausströmdüsen (6a,6b,6c,6d) führen, die Luft in den Innenraum befördern,
1.2 wenigstens zwei der Luftausströmdüsen (6a,6b,6c,6d) sind beabstandet voneinander angeordnet,
1.3 mehreren in dem Gehäuse (3) gelagerten Absperrelementen (8a,8b,8c,8d) zum Absperren von wenigstens den zu den Luftausströmdüsen (6a,6b,6c,6d) führenden Luftabströmöffnungen (5a,5b,5c,5d),
1.4 die Absperrelemente (8a,8b,8c,8d) sind über mechanische Verbindungselemente (11a,11b,11c,11d) mit wenigstens einem, von Hand bedienbaren, in dem Gehäuse (3) gelagerten Betätigungselement (10a,10b,10c,10d) verbunden,
1.5 das Gehäuse (3) ist mit den Absperrelementen (8a,8b,8c,8d), den Betätigungselementen (10a,10b,10c,10d) und den Verbindungselementen (11a,11b,11c,11d) als komplette Einheit in die Instrumententafel (1) eingebaut.

2. Vorrichtung nach Anspruch 1,
**dadurch gekennzeichnet, daß**
jedes Absperrelement (8a,8b,8c,8d) mit einem separaten Betätigungselement (10a,10b,10c,10d) verbunden ist.

3. Vorrichtung nach Anspruch 1 oder 2,
**dadurch gekennzeichnet, daß**
wenigstens zwei erste Luftausströmdüsen (6a,6b) in einem mittleren Bereich der Instrumententafel (1) und wenigstens zwei zweite Luftausströmdüsen (6c,6d) in den seitlichen Endbereichen der Instrumententafel (1) angeordnet sind.

4. Vorrichtung nach Anspruch 1, 2 oder 3,
**dadurch gekennzeichnet, daß**
das Gehäuse (3) in der Instrumententafel (1) unmittelbar hinter den beiden ersten Luftausströmdüsen (6a,6b) angeordnet ist.

5. Vorrichtung nach einem der Ansprüche 1 bis 4,
**dadurch gekennzeichnet, daß**
die Absperrelemente (8a,8b,8c,8d) als drehbare Klappen ausgebildet sind.

6. Vorrichtung nach einem der Ansprüche 1 bis 5,
**dadurch gekennzeichnet, daß**
die Betätigungselemente (10a,10b,10c,10d) als von Hand drehbare Räder ausgebildet sind.

7. Vorrichtung nach einem der Ansprüche 1 bis 6,
**dadurch gekennzeichnet, daß**
die Verbindungselemente (11a,11b,11c,11d) als Gestänge ausgebildet sind.

8. Vorrichtung nach einem der Ansprüche 1 bis 7,
**dadurch gekennzeichnet, daß**
derjenige Bereich des Gehäuses (3), in dem die Betätigungselemente (10a,10b,10c,10d) angeordnet sind, mit einer Blende abgedeckt ist.
